Europäisches Patentamt

European Patent Office

Office européen des brevets

(11) Numéro de publication: **0 392 916**
**A1**

## DEMANDE DE BREVET EUROPEEN

(21) Numéro de dépôt: 90400975.0

(22) Date de dépôt: 10.04.90

(51) Int. Cl.⁵: **H04N  1/00**

(30) Priorité: 13.04.89 FR 8904893

(43) Date de publication de la demande:
17.10.90 Bulletin  90/42

(84) Etats contractants désignés:
AT BE CH DE DK ES FR GB GR IT LI LU NL SE

(71) Demandeur: SOCIETE D'APPLICATIONS
GENERALES D'ELECTRICITE ET DE
MECANIQUE SAGEM
6, Avenue d'Iéna
F-75783 Paris Cédex 16(FR)
(72) Inventeur: **Penalver, Georges**
**22 rue Henri Spysschaert**
**F-78700 Conflans Sainte Honorine(FR)**
Inventeur: **Kuhn, Alex**
**30a rue Montmaur**
**F-95430 Auvers Sur Oise(FR)**

(74) Mandataire: **Bloch, Gérard et al**
**2, square de l'Avenue du Bois**
**F-75116 Paris(FR)**

(54) **Appareil de télécopie permettant une simplification dans la manipulation des documents.**

(57) L'appareil est pourvu d'un réceptacle (2) comprenant un bras (22) pourvu d'une extrémité recourbée. (220), bras qui, en position de travail, s'étend dans la direction d'arrivée des documents (51, 52, ,53) pour que son extrémité recourbée retienne ceux-ci, et qui, en position de repos, pivote pour s'escamoter sur le côté du corps de l'appareil, de façon à laisser libre la sortie des documents. De plus, les documents à imprimer sont imprimés sur une bande de papier (5) sensiblement horizontale, entraînée en déplacement devant une tête d'impression (7) disposée sous la bande de papier (5), et suivie du réceptacle (2) sensiblement horizontal disposé dans le prolongement de la bande de papier (5).

EP 0 392 916 A1

FIG.3

La présente invention a pour objet un appareil de télécopie pour analyser des documents, en transmettre le contenu à distance, et pour imprimer d'autres documents dont le contenu est transmis par un appareil distant identique, et pourvu d'au moins un réceptacle pour les documents analysés ou imprimés.

On connaît déjà de tels appareils, d'un emploi couramment répandu à l'heure actuelle. Toutefois, si leur fonctionnement donne tout à fait satisfaction en ce qui concerne la qualité de la transmission des documents, ces appareils présentent quelques inconvénients pour leurs utilisateurs quotidiens, inconvénients relatifs à la manipulation des documents que l'on souhaite transmettre ou que l'on a reçu.

On connait aussi, par le document US-A-4 729 036, un appareil de télécopie pourvu d'un bras escamotable de guidage des documents à insérer dans l'appareil pour analyse de leur contenu, bras escamotable qui bloque l'entrée des documents lorsqu'il est escamoté.

Par contre, le ou les réceptacles de type connu dans lesquels tombent les documents après analyse ou impression sont souvent particulièrement encombrants, alors que, paradoxalement, la taille des appareils eux-mêmes a tendance à devenir de plus en plus petite. Par ailleurs, lorsque l'on reçoit un document de plusieurs pages transmises dans l'ordre de leur numérotation, le paquet correspondant se trouve disposé dans l'ordre inverse, ce qui oblige le destinataire à remettre les pages dans le bon ordre. Il s'agit d'une manipulation fastidieuse. Un moyen pour l'éviter serait de convenir que l'expéditeur doit envoyer le document dans l'ordre inverse de celui de la numérotation, mais ceci ne fait que déplacer le problème. De plus, il n'est ni naturel ni pratique d'expédier un document en commençant par la dernière page, d'autant plus que, en cas d'interruption de la communication téléphonique en cours du document, il est souhaitable que le destinataire soit en possession de la première page, qui mentionne en général le nom de l'expéditeur et un certain nombre de renseignements utiles au destinataire.

La présente invention vise à pallier les inconvénients précédents en procurant un appareil de télécopie pourvu d'un ou plusieurs réceptacles peu encombrants et d'un emploi pratique, dans lequel les pages des documents reçus qui en comportent plusieurs sont dans le bon ordre, afin de procurer notamment une simplification dans la manipulation des documents.

A cet effet, et selon une première caractéristique, elle a pour objet un appareil de télécopie du type défini ci-dessus, caractérisé par le fait que le réceptacle comprend un bras pourvu, à une extrémité libre, de moyens de retenue, bras qui, en position de travail, s'étend dans la direction d'arrivée des documents pour que les moyens de retenue de son extrémité libre retiennent ceux-ci, et qui, en position de repos, s'escamote sur le côté du corps de l'appareil, de façon à laisser libre la sortie des documents.

Dans l'appareil de l'invention, le corps du réceptacle est de dimensions réduites, du fait qu'il est suffisant que sa dimension soit égale à la longueur des documents à recevoir, diminuée de la longueur du bras escamotable. De plus, lorsque le télécopieur est disposé sur un support non rugueux permettant au documents de glisser, on peut momentanément escamoter le bras en position de repos, afin de disposer d'une partie de la surface normalement prévue pour le réceptacle, sans empêcher toutefois la sortie d'éventuels documents arrivant pendant ce laps de temps.

Avantageusement, les moyens de retenue comprennent l'extremité recourbée du bras escamotable, et le bras est monté pivotant sur une plaque montée elle-même coulissante parallèlement à la direction de sortie des documents, la plaque étant dégagée hors du corps de l'appareil en position de travail, et coulissée sous le corps de l'appareil en position de repos.

Dans ce cas, il est possible de dégager de façon momentanée ou définitive la totalité de la surface normalement prévue pour le réceptacle, sans empêcher l'arrivée de documents. De plus, du fait que l'extrémité recourbée du bras est repliée sur le côté du corps de l'appareil, la hauteur de la plaque coulissante peut être extrêmement réduite, ce qui diminue d'autant l'encombrement total de l'appareil.

Selon une autre caractéristique, les documents à imprimer sont imprimés sur une bande de papier sensiblement horizontale, entraînée en déplacement devant une tête d'impression disposée sous la bande de papier, et suivie d'un réceptacle sensiblement horizontal disposé dans le prolongement de la bande de papier.

Il en résulte que chaque feuillet arrive dans le réceptacle avec la face imprimée contre le fond du réceptacle. Le premier feuillet reçu, c'est à dire en principe celui qui concerne la page 1 est en contact avec le fond du réceptacle, puis vient le deuxième qui concerne la page 2, et ainsi de suite. Lorsque tous les feuillets sont arrivés, il suffit de prendre le paquet et de le retourner en bloc pour obtenir le document complet avec les pages dans le bon ordre.

La présente invention sera mieux comprise à la lecture de la description suivante de la forme de réalisation préférée de l'appareil de l'invention et de ses variantes, faite en se référant aux dessins annexés, sur lesquels:

- la figure 1 représente une vue en perspective d'un appareil de télécopie montrant l'un de ses réceptacles à documents,

- les figures 2 représentent des vues de côté de l'appareil de la figure 1, avec le réceptacle en position de repos et en position de travail,

- la figure 3 représente une variante de l'appareil de la figure 1, et,

- la figure 4 représente une vue de côté schématique du dispositif d'entraînement, d'impression et de réception du papier de l'appareil de la figure 1.

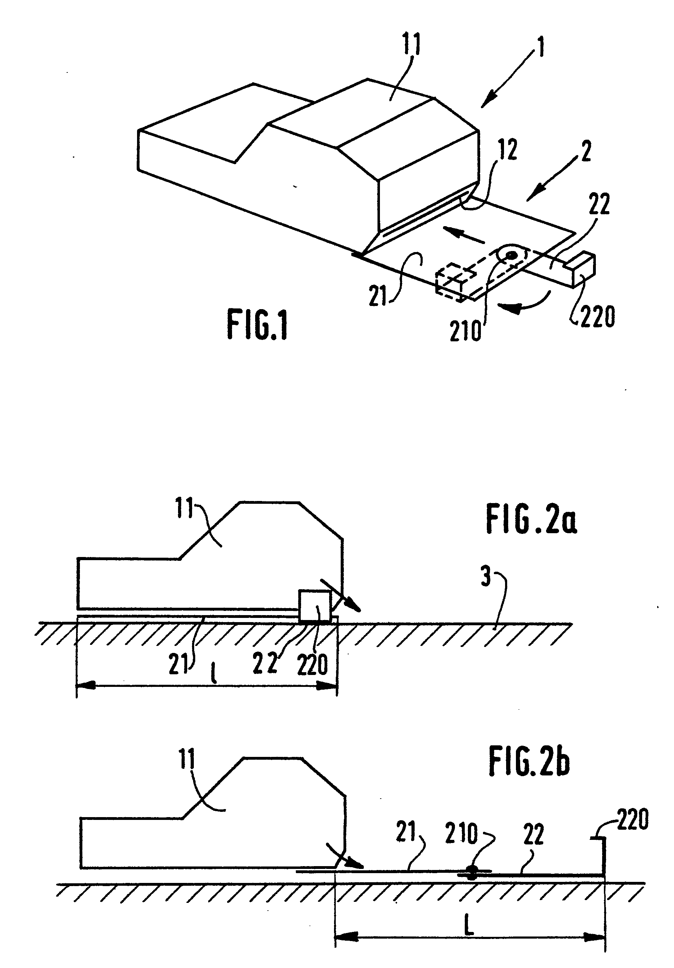

En se référant à la figure 1, un appareil de télécopie 1 est pourvu d'un réceptacle 2, ici destiné à recevoir des documents analysés en vue de leur transmission à distance, documents qui ont été introduits à cet effet dans l'appareil 1, par une entrée non représentée dans un souci de simplicité. Les documents analysés arrivent ici par une sortie 12 en forme de fente.

Le réceptacle 2 comprend ici une plaque 21 montée coulissante par rapport au corps 11 de l'appareil, parallèlement à la direction de sortie des documents analysés. Sur la plaque 21 est monté pivotant un bras 22, autour d'un axe 210 situé sensiblement au milieu du bord de la plaque 21 qui est perpendiculaire à sa direction de coulissement et qui est le plus éloigné du corps 11 de l'appareil. Le bras 22 est pourvu d'une extrémité 220 recourbée vers le haut. Le bras 22 peut prendre deux positions, une position de travail, dans laquelle il s'étend dans la direction d'arrivée des documents pour que son extrémité recourbée retienne ceux-ci, et une position de repos dans laquelle, après pivotement, il s'escamote, ou s'efface, sur le côté du corps 11 de l'appareil, pour laisser libre la sortie 12 des documents.

Comme le montrent les figures 2a et 2b, la plaque 21 peut coulisser sous le corps 11 de l'appareil en position de repos, et être dégagée hors de ce corps 11 en position de travail. Ainsi la longueur l du corps 11 peut-elle être inférieure à la longueur L du réceptacle en position de travail déployée, ce qui permet de bénéficier d'un encombrement réduit, soit de manière permanente si l'on tolère que les documents sortent directement sur le support 3 sur lequel repose l'appareil 1, soit de façon momentanée si on a besoin seulement de dégager de la place pendant un court laps de temps.

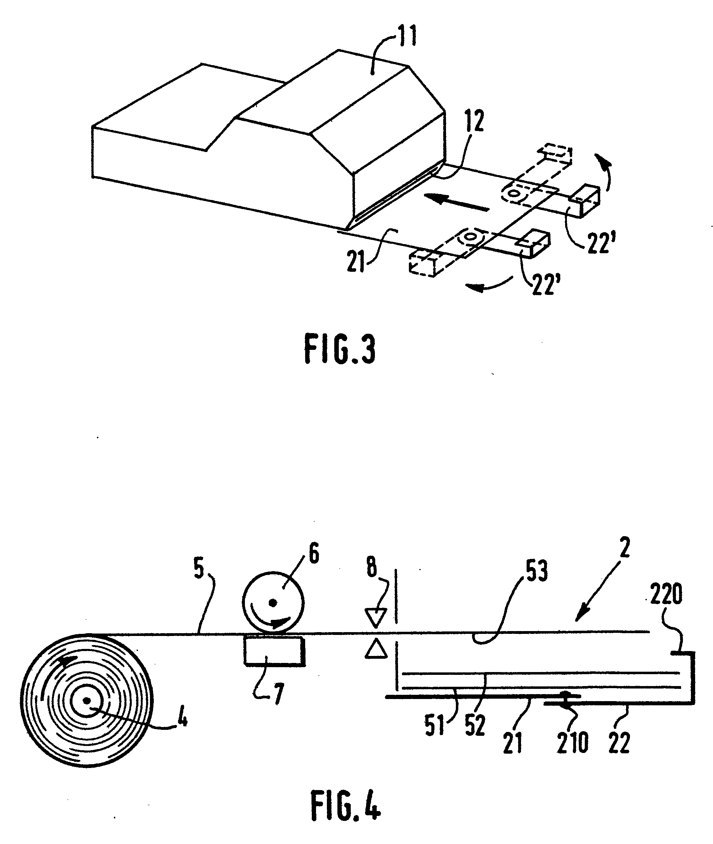

La figure 3 montre une variante de l'appareil de la figure 1, dans lequel il est prévu deux bras 22' pivotant dans des sens opposés, chacun de son propre côté du corps 11 de l'appareil 1.

Sur la figure 4 a été représenté de façon schématique le dispositif d'impression du papier commandé par le système de réception de l'appareil, en réponse à des données reçues. Il comprend ici un rouleau 4, sur lequel est enroulée une bande 5 de papier, ici thermosensible. La bande 5 est sensiblement horizontale, et elle est entraînée en déplacement par un cylindre rotatif 6 devant une tête d'impression 7, ici une tête thermique, disposée sous la bande de papier 5. Un coupe-papier 8 coupe la bande après impression, afin que soient restituées les différents feuillets 51, 52, 53... du document original. La tête 7 et le coupe-papier 8 sont suivis du réceptacle 2, sensiblement horizontal et disposé dans le prolongement de la bande de papier 5. Ainsi les côtés imprimés des feuillets 51, 52, 53...sont dirigés du côté du fond du réceptacle, ce qui fait qu'en retournant globalement l'ensemble du paquet, l'utilisateur dispose des feuillets avec les pages dans le bon ordre.

## Revendications

1. Appareil de télécopie (1) pour analyser des documents, en transmettre le contenu à distance, et pour imprimer d'autres documents dont le contenu est transmis par un appareil distant identique, et pourvu d'au moins un réceptacle (2) pour les documents analysés ou imprimés, appareil caractérisé par le fait que le réceptacle (2) comprend un bras (22) pourvu, à une extrémité libre, de moyens de retenue (220), bras qui, en position de travail, s'étend dans la direction d'arrivée des documents pour que les moyens de retenue (220) de son extrémité libre retiennent ceux-ci, et qui, en position de repos, s'escamote sur le côté du corps (11) de l'appareil (1), de façon à laisser libre la sortie (12) des documents.

2. Appareil selon la revendication 1, caractérisé par le fait que les moyens de retenue comprennent l'extrémité recourbée (220) du bras escamotable.

3. Appareil selon l'une des revendications 1 ou 2, caractérisé par le fait que le bras escamotable (22) est monté pivotant sur une plaque (21) montée elle-même coulissante parallèlement à la direction de sortie des documents, la plaque (21) étant dégagée hors du corps (11) de l'appareil (1) en position de travail, et coulissée sous le corps (11) de l'appareil (1) en position de repos.

4. Appareil selon l'une des revendications 1 à 3, caractérisé par le fait que les documents (51, 52, 53) à imprimer sont imprimés sur une bande de papier (5) sensiblement horizontale, entraînée en déplacement devant une tête d'impression (7) disposée sous la bande de papier (5), et suivie d'un réceptacle (2) sensiblement horizontal disposé dans le prolongement de la bande de papier (5).

FIG.1

FIG.2a

FIG.2b

FIG.3

FIG.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,Y | US-A-4 729 036 (IKEDA) <br> * Colonne 8, ligne 44 - colonne 9, ligne 14 * <br> --- | 1,3,4 | H 04 N    1/00 |
| Y | US-A-4 646 162 (SUE) <br> * Colonne 2, lignes 45-56 * <br> --- | 1,3,4 | |
| A | REVIEW OF THE ELECTRICAL COMMUNICATION LABORATORIES, vol. 33, no. 2, mars 1985, pages 260-270, Tokyo, JP; H. KATAOKA et al.: "Standard type digital facsimile" <br> --- | | |
| A | DE-A-3 042 885 (SIEMENS) <br> --- | | |
| A | PATENT ABSTRACTS OF JAPAN, vol. 7, no. 4 (E-151)[1149], 8 janvier 1983; & JP-A-57 162 872 (RICOH K.K.) 06-10-1982 <br> --- | | |
| A | EP-A-0 168 592 (SIEMENS) <br> ----- | | |

**DOMAINES TECHNIQUES RECHERCHES (Int. Cl.5)**

H 04 N    1/00

Le présent rapport a été établi pour toutes les revendications

| Lieu de la recherche | Date d'achèvement de la recherche | Examinateur |
|---|---|---|
| LA HAYE | 20-07-1990 | DE ROECK A.F.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)